# DEMANDE DE BREVET EUROPEEN

(11) **EP 1 098 124 A1**
(43) Date de publication de la demande: **09.05.2001**
(21) Numéro de dépôt: 00440293.9
(22) Date de dépôt: 02.11.2000
(51) Int. Cl.: F16K 31/165, F16K 1/22, F16K 27/02

(54) **Vanne papillon pourvue d'un dispositif de commande**

(30) Priorité: 02.11.1999 FR 9913843
(71) Demandeur: MGI COUTIER (S.A.), F-01410 Champfromier (FR)
(72) Inventeur: Plachta, Francis, 70400 Frahier et chatebier (FR)
(74) Mandataire: Nithardt, Roland

(57) **Abrégé**

La présente invention concerne une vanne papillon pourvue d'un dispositif de commande simplifié, économique, compact, fiable et assurant une cinématique optimale.

Cette vanne papillon (11) est caractérisée en ce que la tige d'actionnement (23) à déplacement linéaire traverse le papillon (14) coaxialement à son axe de rotation (15) et l'entraîne en rotation par des filetages (27, 26') complémentaires prévus respectivement sur la tige (23) et dans l'alésage central (26) du papillon. Cette tige d'actionnement (23) est commandée par un actionneur pneumatique (30) à membrane adjacent au corps (12) de la vanne. Le déplacement de la tige d'actionnement (23) est contrôlé par un potentiomètre linéaire (51) permettant d'asservir la commande de la vanne et de contrôler son bon fonctionnement.

Applications: Industrie automobile, par exemple.

## Description

La présente invention concerne une vanne papillon pourvue d'un dispositif de commande, ladite vanne comportant un corps traversé par un conduit pour le passage d'un fluide ainsi qu'un papillon disposé dans le conduit et monté pivotant autour d'un axe de rotation de sorte que le papillon obture plus ou moins complètement le conduit selon sa position angulaire, ledit dispositif de commande comportant une tige d'actionnement couplée à un organe de commande agencé pour la déplacer de façon linéaire dans un orifice de guidage ménagé dans une paroi latérale du corps, cette tige d'actionnement étant couplée audit papillon de sorte que, quand la tige d'actionnement est déplacée linéairement, elle entraîne en rotation le papillon autour de son axe de rotation.

Divers dispositifs de commande d'une vanne à papillon sont connus. Typiquement, un dispositif de commande comporte un tige d'actionnement rotatif lié rigidement et coaxialement au papillon. La rotation de la tige d'actionnement provoque la rotation du papillon et donc l'ouverture ou la fermeture du conduit, selon le sens de la rotation. Cette tige d'actionnement rotatif traverse la paroi du corps de la vanne et est couplé à un organe de commande de sa rotation. Pour éviter une fuite de fluide, des moyens d'étanchéité dynamique, tels qu'un joint torique frottant, sont nécessaires entre la tige d'actionnement rotatif et la paroi perforée du corps. L'organe de commande peut être constitué par une poignée, du type robinet, actionnée en rotation manuellement. Il peut également comporter un servomoteur rotatif, tel qu'un moteur électrique rotatif asservi, dans le cas où le débit de fluide dans le conduit de la vanne doit être réglé précisément, en continu et de manière prédéfinie en fonction de paramètres déterminés.

L'organe de commande peut également être constitué d'un actionneur pneumatique à membrane comme dans la publication EP-A-682 199. Dans cette publication, l'actionneur pneumatique est couplé à un mécanisme de transformation d'un mouvement de translation au niveau de la tige d'actionnement en un mouvement de rotation au niveau du papillon. Dans ce mécanisme, la tige d'actionnement est couplée à l'une de ses extrémités à la membrane et comporte à l'autre extrémité une goupille transversale agencée pour circuler dans deux rainures hélicoïdales prévues dans un alésage radial borgne du papillon. Cet alésage radial a une profondeur qui ne s'étend pas au-delà du rayon du papillon et les efforts de transmission de mouvement entre la tige et le papillon sont concentrés aux extrémités de la goupille. Il n'y a donc pas de répartition des efforts et la chaîne cinématique n'est pas optimale pouvant générer des ruptures ou des blocages dans le mécanisme. De plus, la tige d'actionnement est guidée en translation dans un alésage cylindrique du corps de la vanne mais n'est pas bloquée en rotation. Seule sa liaison avec la membrane permet de limiter son mouvement de rotation, ce qui est nettement insuffisant et risque d'endommager la membrane. L'alésage radial du papillon n'étant pas traversant, la tige d'actionnement ne peut pas jouer le rôle d'axe de rotation pour le papillon. Ce dernier est donc guidé en rotation par une portée hémisphérique prévue dans le corps à l'opposé de l'organe de commande. Néanmoins, la réalisation de cette portée hémisphérique aussi bien dans le corps que dans le papillon est très délicate, risque d'engendrer des blocages si les tolérances ne sont pas respectées et oblige de réaliser le corps de vanne en deux demi-coquilles pour permettre son montage. De plus, l'actionneur à membrane n'est pas intégré au corps de la vanne mais est disposé radialement et à distance de ce corps générant un encombrement latéral gênant.

Le but de la présente invention est de résoudre ces inconvénients en fournissant une vanne papillon pourvue d'un dispositif de commande simplifié, économique, compact, intégré à la vanne, facile à monter, fiable, dont la chaîne cinématique permet une meilleure répartition des efforts et une précision de mouvement.

Ce but est atteint par une vanne papillon telle que définie en préambule, caractérisée en ce que le papillon comporte un alésage central traversant pourvu d'un tronçon fileté s'étendant sur une longueur supérieure au rayon dudit papillon, en ce que la tige d'actionnement s'étend sur une longueur au moins égale au diamètre du papillon et comporte un tronçon fileté en prise avec ledit tronçon fileté du papillon, et en ce que ledit alésage et ladite tige d'actionnement sont coaxiaux à l'axe de rotation du papillon.

D'une manière avantageuse, l'orifice de guidage ménagé dans la paroi latérale du corps présente une section carrée et la tige d'actionnement comporte un tronçon de section carrée en correspondance de sorte que cette tige d'actionnement soit guidée en translation dans ledit orifice et bloquée en rotation par rapport audit corps.

Dans une forme de réalisation préférée, les filetages du tronçon fileté de l'alésage central et du tronçon extérieur de la tige d'actionnement comportent chacun plusieurs filets de vis identiques.

De préférence, le déplacement linéaire de la tige d'actionnement est limité entre deux positions extrêmes, et en ce que la course de la tige d'actionnement entre ces deux positions extrêmes correspond à une rotation de 90 degrés du papillon respectivement entre une position fermée, dans laquelle il obture complètement le conduit, et une position ouverte, dans laquelle il ouvre au maximum le conduit.

Dans le cas où le dispositif de commande de la vanne papillon comporte un actionneur pneumatique pourvu d'une enceinte dans laquelle est disposée une membrane étanche mobile et liée rigidement à la tige d'actionnement, cette membrane divisant hermétiquement l'enceinte en deux chambres et étant agencée pour adopter une position à l'intérieur de l'enceinte en fonction de la différence de pression entre les deux chambres afin de commander en déplacement linéaire ladite tige d'actionnement du papillon, le dispositif de commande comporte, d'une manière préférentielle, un boîtier fermé d'un côté par un fond et ouvert de l'autre côté par une ouverture, ce boîtier étant fixé au corps de la vanne avec l'ouverture en correspondance de la paroi latérale de sorte que le boîtier définit avec cette paroi latérale ladite enceinte et le pourtour de la membrane étanche étant pris en sandwich entre la paroi latérale plane du corps et l'extrémité du boîtier correspondant à l'ouverture.

L'une des chambres peut communiquer avec le conduit par un passage ménagé dans la paroi latérale et peut être une chambre de référence, et l'autre chambre peut communiquer avec une source de fluide de commande par un passage ménagé dans le boîtier et peut être une chambre de commande.

Dans la forme de réalisation préférée, le dispositif de commande comporte un ressort de rappel disposé dans l'une des deux chambres, ce ressort de rappel étant agencé pour solliciter axialement ladite tige d'actionnement.

Dans le cas où le dispositif de commande de la vanne papillon comporte un actionneur électrique pourvu d'au moins une bobine d'induction montée autour d'une culasse fixe agencée pour recevoir un noyau mobile en translation, le noyau mobile étant couplé à ladite tige d'actionnement, l'ensemble étant logé dans un boîtier, le boîtier est, avantageusement, monté latéralement sur ledit corps autour d'une partie saillante dudit corps, cette partie saillante comportant un logement coaxial à l'axe de rotation dudit papillon, en prolongement dudit orifice de guidage et agencé pour guider linéairement ledit noyau mobile. Ce noyau mobile et la tige d'actionnement sont de préférence formés d'une seule pièce.

Dans ce cas, le dispositif de commande comporte un ressort de rappel disposé entre ledit noyau mobile et le fond dudit logement.

Dans une variante de réalisation avantageuse, le dispositif de commande peut comporter un organe de mesure du déplacement linéaire de ladite tige d'actionnement, cet organe de mesure étant monté dans ledit corps à l'opposé dudit dispositif de commande et étant couplé à l'extrémité libre de la tige d'actionnement.

Cet organe de mesure peut comporter, par exemple, un potentiomètre linéaire agencé pour délivrer un signal proportionnel au déplacement linéaire de ladite tige d'actionnement.

La présente invention et ses avantages seront mieux compris dans la description suivante de plusieurs formes de réalisation, données à titre d'exemple non limitatif, d'une vanne papillon et en référence aux dessins annexés, dans lesquels :
- la figure 1 est une vue éclatée en perspective d'une vanne à papillon et d'un dispositif de commande selon l'invention,
- la figure 2 est une vue en coupe axiale de la vanne papillon montée de la figure 1,
- la figure 3 est une vue en coupe axiale agrandie du papillon de la vanne et de la tige d'actionnement du dispositif de commande,
- les figures 4a et 4b sont des demi vues en perspective de la vanne papillon de la figure 2 respectivement en position fermée et en position ouverte,
- la figure 5 est une vue en coupe axiale d'une variante de réalisation de la vanne papillon selon l'invention, et
- la figure 6 est une vue en coupe axiale d'une vanne papillon pourvue d'un autre dispositif de commande.

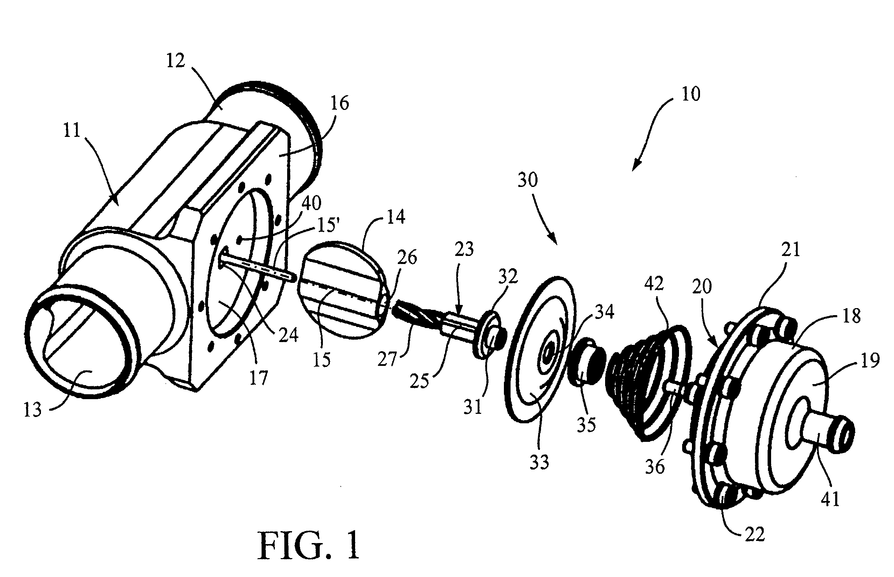

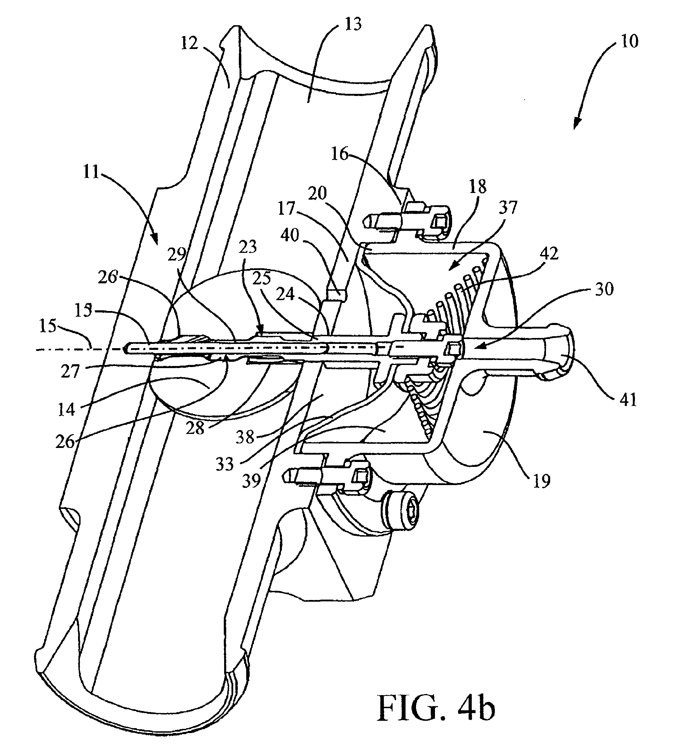

En référence aux figures 1 à 3, la vanne à papillon 11 pourvue d'un dispositif de commande 10 selon l'invention comporte un corps 12 de forme généralement cylindrique. Un conduit 13 cylindrique est ménagé coaxialement à travers le corps 12 de sorte qu'il débouche de part et d'autre de celui-ci. Ce conduit 13 forme un passage pour guider l'écoulement d'un fluide. Un papillon 14 ayant généralement la forme d'un disque est disposé dans le conduit 13, sensiblement au milieu de celui-ci. Le papillon 14 est monté pivotant autour d'un axe de rotation 15 fixe par rapport au corps 12 et disposé sensiblement diamétralement dans le conduit 13. Cet axe de rotation 15 est matérialisé, dans cet exemple, par une tige 15' traversant de part en part ledit conduit 13 et logée à ses extrémités dans ledit corps 12. Le papillon 14 obture plus ou moins complètement le conduit 13 selon sa position angulaire. Il est agencé pour pivoter sur 90 degrés entre une position fermée, représentée par les figures 1, 2 et 4a, dans laquelle il obture complètement le conduit 13 de sorte que le débit de fluide est nul, et une position ouverte, représentée par la figure 4b, dans laquelle il ouvre complètement le conduit 13 de sorte que le débit de fluide est maximum. Le corps 12 de la vanne 11 comporte en outre une bride de fixation latérale 16, approximativement annulaire, pour fixer le dispositif de commande 10. Cette bride 16 est disposée autour d'une paroi latérale 17 du corps 12 en regard du papillon 14, sensiblement perpendiculaire à l'axe de rotation 15 du papillon 14.

Le dispositif de commande 10 comporte un boîtier 18 de forme sensiblement cylindrique, fermé du côté opposé à la vanne 11 par un fond 19 et ouvert de l'autre côté, correspondant à la paroi latérale 17, par une ouverture 20. Le boîtier 18 comporte un élément de fixation tel qu'une collerette annulaire 21 disposée autour du boîtier 18 dans une zone proche de l'ouverture 20. Cette collerette 21 est fixée au moyen de vis de fixation 22 par exemple à la bride de fixation 16 du corps 12. Le diamètre extérieur du boîtier 18 est sensiblement égal au diamètre intérieur de la bride annulaire 16 de sorte que le tronçon d'extrémité côté ouverture du boîtier 18 est positionné dans la bride 16.

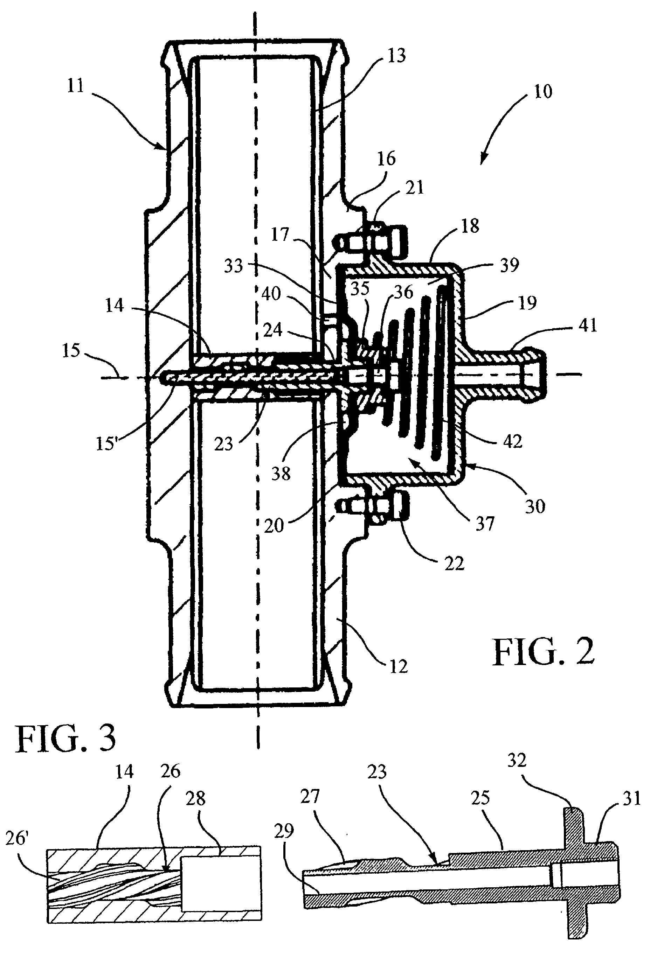

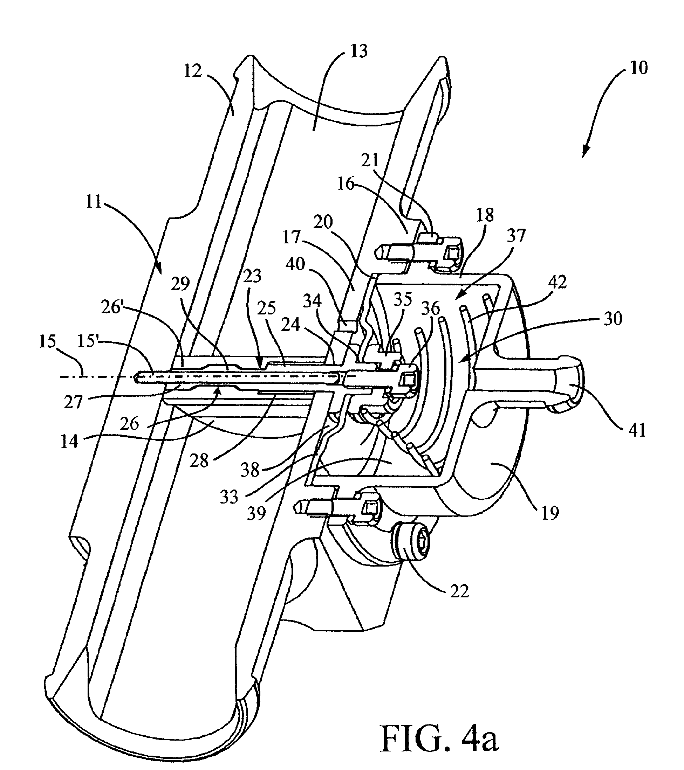

Le dispositif de commande 10 comporte une tige d'actionnement 23 du papillon 14 montée coulissante à travers un orifice de guidage 24 traversant, de section carrée, ménagé au centre de la paroi latérale 17. Cet orifice carré 24 guide en déplacement linéaire la tige 23 qui comporte à cet effet et en correspondance un tronçon de section carrée 25 et simultanément bloque la tige 23 en rotation. Le papillon 14 et cette tige d'actionnement 23 sont mieux représentés par la figure 3. Le papillon 14 comporte un alésage central traversant 26 pourvu d'un tronçon fileté 26', dont l'axe est confondu avec son axe de rotation 15. Ce tronçon fileté 26' s'étend sur une longueur supérieure au rayon du papillon 14. Le filetage de ce tronçon 26' comporte trois filets de vis intérieurs par exemple dont le pas est relativement grand. La tige d'actionnement 23 s'étend sur une longueur supérieure au diamètre du papillon 14 et comporte un tronçon fileté d'extrémité 27 complémentaire, comportant trois filets de vis extérieurs dont le pas est identique à celui des trois filets de vis intérieurs de l'alésage 26. Ce tronçon fileté 27 est en prise avec le tronçon fileté 26' du papillon 14 de sorte que quand la tige d'actionnement 23 est déplacée de façon linéaire, elle entraîne en rotation le papillon 14 autour de son axe 15. Ce mode de transmission de mouvement par filetage sur une longueur supérieure au diamètre du papillon 14 permet de répartir uniformément les efforts pour éviter les zones de rupture ou de blocage et rend possible la transmission de couples de rotation importants. Le déplacement linéaire de la tige d'actionnement 23 est limité entre deux positions extrêmes rentrée et sortie de sorte que la course de la tige 23 correspond à une rotation de 90 degrés du papillon 14 respectivement entre sa position fermée, figure 4a, et sa position ouverte, figure 4b.

L'alésage central traversant 26 du papillon 14 comporte également un logement cylindrique 28 adapté pour recevoir librement le tronçon de section carrée 25 de la tige d'actionnement 23. Cette tige d'actionnement 23 comporte en outre un orifice de guidage cylindrique traversant 29 dans lequel est disposé la tige 15' du papillon 14 et dont le diamètre intérieur est légèrement supérieur au diamètre extérieur de cette tige 15' afin de ménager un jeu de fonctionnement autorisant un déplacement relatif linéaire entre eux.

La tige d'actionnement 23 est couplée à un organe de commande 30 de son déplacement linéaire entre ses deux positions extrêmes rentrée et sortie. A cet effet, cette tige 23 comporte une tête cylindrique 31, à son extrémité opposée au tronçon d'extrémité fileté 27, et un bourrelet annulaire 32 disposé à sa périphérie entre le tronçon carré 25 et la tête 31. L'extrémité du trou cylindrique 29 de la tige 23 est filetée dans une zone approximativement en correspondance de la tête 31 et du bourrelet 32. L'organe de commande 30 est constitué d'un actionneur pneumatique et comporte une membrane 33 ayant sensiblement la forme d'un disque légèrement bombé dont le diamètre extérieur naturel est sensiblement égal au diamètre de la paroi latérale 17 du corps 12. Cette membrane 33 comporte un orifice central cylindrique 34 traversé par la tête 31 de la tige d'actionnement 23 dont le diamètre extérieur est sensiblement égal au diamètre intérieur de cet orifice 34. La zone centrale de la membrane 33 autour de l'orifice 34 est fixée contre le bourrelet 32 de l'axe 23 par un capuchon 35. Ce capuchon 35 est engagé autour de la tête d'axe 31 et est fixé à celle-ci au moyen d'une vis de fixation 36 vissée dans l'extrémité filetée du trou 29. Le pourtour circulaire de la membrane 33 est fixe et est pris en sandwich entre la paroi latérale 17 du corps 12 et l'extrémité du boîtier 18 correspondant à l'ouverture 20. Cette membrane 33 assure ainsi l'étanchéité entre l'orifice de guidage carré 24 et la tige d'actionnement 23. Ainsi, il n'est pas nécessaire de prévoir de joints supplémentaires.

Le boîtier 18 du dispositif de commande 10 et la paroi latérale 17 du corps 12 définissent ensemble une enceinte 37, ce dispositif de commande étant par conséquent intégré audit corps 12. La membrane 33 sépare hermétiquement cette enceinte 37 en une chambre de référence 38 et une chambre de commande 39 qui sont disposées de part et d'autre de la membrane 33. La chambre de référence 38 communique avec le conduit 13 par un passage 40 ménagé dans la paroi latérale 17. La chambre de commande 39 communique avec un embout de commande 41 comportant un passage dans le fond 19 du boîtier 18.

Le passage 40 permet de dévier une petite partie du fluide contenu dans le conduit 13 vers la chambre de référence 38 et de fixer la pression de cette chambre 38 à la pression du fluide du conduit 13. L'embout de commande 41 est relié à une source externe de fluide de commande, non représentée, et permet de fixer la pression de la chambre de commande 39 à la pression du fluide de commande. La pression de ce fluide de commande détermine la différence de pression autour de la membrane 33 ou pression transmembranaire, laquelle détermine la position ou l'état de déformation de la membrane 33.

Quand la pression de la chambre de référence 38 est inférieure à la pression de la chambre de commande 39, la membrane 33 tend à se déformer vers un état dans lequel elle est approximativement plane, ce qui correspond à un volume minimum de la chambre de référence 38 et à un volume maximum de la chambre de commande 39. Cet état du dispositif de commande 10, dans lequel la tige d'actionnement 23 est dans la position rentrée délimitée par la paroi latérale 17 du corps 12 sur laquelle vient buter le bourrelet 32, correspond à la position fermée du papillon 14 représentée par la figure 4a. Quand la pression de la chambre de référence 38 est supérieure à la pression de la chambre de commande 39, la membrane 33 tend à se déformer vers un état dans lequel elle est sensiblement bombée, sous l'effet par exemple d'une dépression générée par le fluide de commande à travers le passage de l'embout de commande 41, ce qui correspond à un volume maximum de la chambre de référence 38 et à un volume minimum de la chambre de commande 39. Cet état du dispositif de commande 10, dans lequel la tige d'actionnement 23 est dans la position sortie délimitée par le fond 19 du boîtier 18 sur lequel vient buter la vis de fixation 36 du capuchon 35, correspond à la position ouverte du papillon 14 représentée par la figure 4b. En cas d'équilibre des pressions de part et d'autre de la membrane 33, celle-ci tend à s'immobiliser dans un état de déformation intermédiaire quelconque entre son état plat et son état bombé, de manière à immobiliser la tige d'actionnement 23 entre sa position rentrée et sa position sortie pour régler plus ou moins fort le débit de fluide dans le conduit 13.

Un ressort de rappel 42, de forme sensiblement tronconique, monté entre le capuchon 35 et le fond 19 du boîtier 18 sollicite la tige d'actionnement 23 en rappel vers sa position rentrée, correspondant à la position fermée du papillon 14 et donc à un débit nul dans le conduit 13 de la vanne 11. D'une part, cela évite d'utiliser la source de fluide de commande en cas de fermeture volontaire et prolongée de la vanne 11 et d'autre part de fermer la vanne 11 en cas de défaillance de la source de fluide de commande pour des raisons de sécurité.

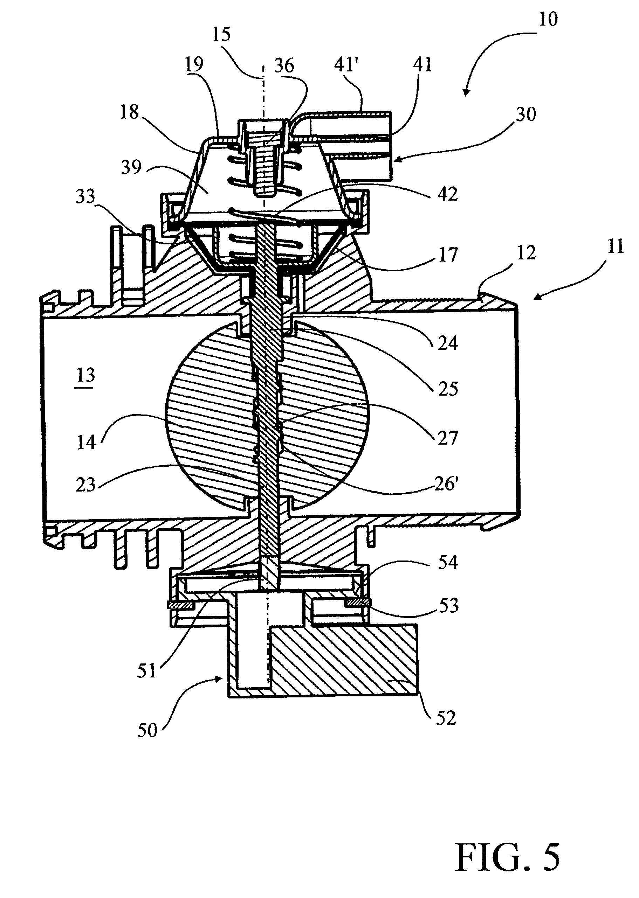

La figure 5 illustre une autre forme de réalisation d'une vanne papillon 11 pourvue d'un dispositif de commande 10 selon l'invention. Dans cette forme de réalisation, les pièces étant sensiblement les mêmes que dans l'exemple précédent portent les mêmes numéros de référence. Seuls quelques détails de construction les différencient. La tige d'actionnement 23 s'étend au-delà du papillon à l'opposé de l'organe de commande 30, son extrémité libre étant guidée en rotation dans le corps 12 de la vanne. La tige d'actionnement 23 est, par conséquent, agencée pour commander la rotation du papillon 14 et simultanément le guider en rotation autour de son axe 15, ce qui permet de supprimer la tige 15' et de simplifier la tige d'actionnement 23. Le papillon 14 est guidé axialement entre deux portées planes prévues dans le conduit 13. L'organe de commande 30 est également légèrement différent. La paroi latérale 17 du corps 12 présente une forme tronconique et l'extrémité de la tige d'actionnement 23 couplée à la membrane 33 comporte un logement pour le ressort de rappel 42 qui prend appui dans le fond 19 du boîtier 18. Une vis de réglage 36 est prévue dans le fond 19 de ce boîtier 18 pour ajuster la course de la tige d'actionnement 23. La chambre de commande 39 communique avec un embout de commande 41 entouré d'un carter de protection 41' pour le protéger contre les risques d'endommagement.

Cette variante de réalisation se distingue de la réalisation précédente par le fait que la vanne papillon 11 comporte un organe de mesure 50 du déplacement de la tige d'actionnement 23. Cet organe de mesure 50 comporte, dans l'exemple représenté, un potentiomètre linéaire 51 couplé directement à l'extrémité libre de la tige d'actionnement 23 et agencé pour fournir un signal de tension variable en fonction du déplacement de cette tige. Ce signal est transmis à un dispositif d'asservissement par le biais d'un boîtier de connexion 52. Cet ensemble formé par le boîtier de connexion 52 et le potentiomètre linéaire 51 forme un module rapporté sur le corps 12 de la vanne, par exemple au moyen d'une épingle de fixation 53 logée dans une fente 54 prévue dans ledit corps. Ce potentiomètre linéaire 51 (non représenté en détail) comporte de manière connue un curseur en contact permanent avec la tige d'actionnement 23 sous l'action d'un ressort de rappel et un circuit imprimé formant une piste conductrice sur laquelle se déplace le curseur. En fonction de la position de la tige d'actionnement 23, et donc du curseur, la tension aux bornes du potentiomètre varie. Cet organe de mesure 50 du déplacement permet, par conséquent, un asservissement du déplacement linéaire de la tige d'actionnement 23 et donc de la rotation du papillon 14 pour en déduire la perte de charges dans le moteur, par exemple. Ce type d'asservissement assure également une fonction de sécurité étant donné qu'il permet d'avoir un retour de l'ordre de commande appliqué au dispositif de commande 10, 60 de la vanne papillon 11. Cet asservissement permet, en d'autres termes, de travailler en boucle fermée et non en boucle ouverte, pour vérifier le bon fonctionnement de la chaîne cinématique et alerter en cas d'anomalie. Bien entendu d'autres types de capteur de déplacement peuvent être envisagés.

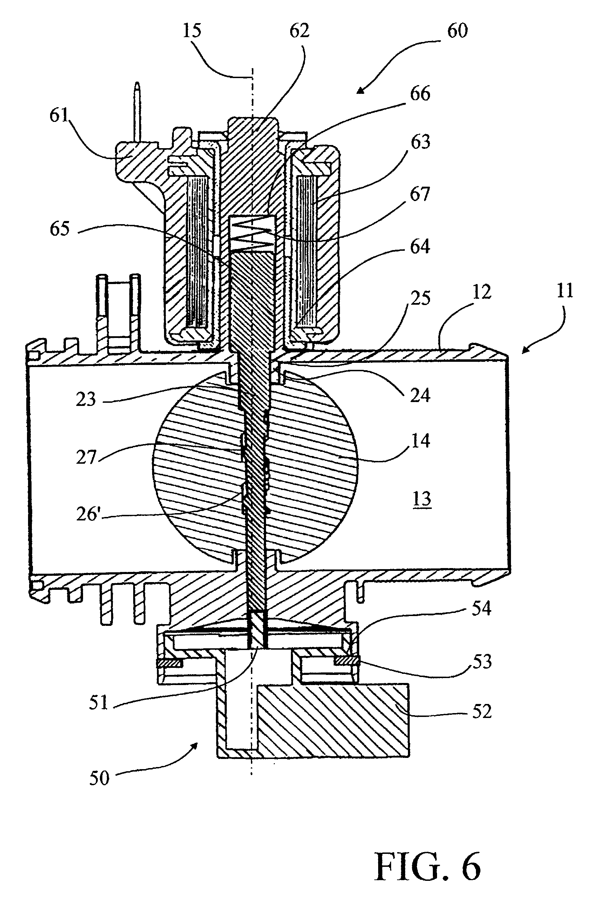

La figure 6 illustre une vanne papillon 11 pourvue d'un dispositif de commande 60. Les pièces sensiblement similaires à celles des exemples précédents portent les mêmes numéros de référence. Seul le dispositif de commande 60 diffère puisqu'il est constitué d'un actionneur électrique proportionnel et non plus pneumatique comme dans les exemples précédents. Il comporte un boîtier 61 rapporté latéralement sur le corps 12 de la vanne 11 autour d'une partie saillante 62 radiale de ce corps. Ce boîtier 61 comporte au moins une bobine d'induction 63 montée autour d'une culasse fixe 64 agencée pour recevoir un noyau mobile 65 en translation. Ce noyau mobile 65 est couplé à ou fait partie intégrante de la tige d'actionnement 23. Il est guidé linéairement dans un logement 66 formé dans ladite partie saillante 62 du corps 12. Le logement 66 et le noyau mobile 65 ont une section de forme complémentaire pour assurer un guidage en translation de la tige d'actionnement 23. Cette dernière est bloquée en rotation par son tronçon carré 25 guidé dans l'orifice carré 24. Par ailleurs, le logement 66 a une profondeur supérieure à la longueur du noyau mobile 65 pour autoriser son déplacement linéaire. Un ressort de rappel 67 est disposé dans le fond du logement 66 pour rappeler la tige d'actionnement 23 qui correspond, dans l'exemple illustré, à la position ouverte du papillon 14. Néanmoins d'autres configurations peuvent être envisagées en fonction du domaine d'application de la vanne papillon 11. Pour des questions de montage, la partie saillante 62 peut être ouverte et obturée par un bouchon rapporté et vissé par exemple.

Ce type d'actionneur électrique 60 permet de piloter cette vanne papillon 11 directement par un courant d'alimentation étant donné que le champ magnétique induit par la bobine d'induction, qui génère le déplacement linéaire de la tige d'actionnement 23, est proportionnel au courant d'alimentation de cette bobine.

La vanne papillon 11 équipé de l'un ou l'autre dispositif de commande 10, 60 propose une solution technique originale pour la commande du papillon 14. Le fait de prévoir le mécanisme de transformation de mouvement dans le papillon 14 permet de supprimer toute étanchéité dynamique autour d'un axe tournant nécessaire dans la majorité des dispositifs de l'art antérieur. L'étanchéité de la vanne 11 au niveau du dispositif de commande 10, 60 est désormais statique et est améliorée car elle est assurée directement par la membrane étanche 33 dans le dispositif de commande 10. Ainsi, cette membrane 33 cumule les fonctions de commande et d'étanchéité, permettant de réduire le coût global du dispositif de commande. Dans le dispositif de commande 60, le noyau mobile 65 se déplaçant dans un logement radial 66 formé par une partie saillante 62 dudit corps 12 aucune étanchéité particulière n'est nécessaire.

En outre, dans le cas de circuit de fluide complexe, où le débit de fluide dans le conduit de la vanne doit être réglé précisément, en continu et de manière prédéfinie directement en fonction de la pression d'un fluide circulant dans une autre branche du circuit, par exemple dans un circuit de régulation thermique d'un moteur à combustion interne d'un véhicule automobile, la vanne peut directement être commandée par la pression de ce fluide existant qui constitue une source de commande particulièrement économique pour le dispositif de commande 10. Dans une autre application, la commande de la vanne peut provenir de n'importe quel circuit de fluide parallèle générant par exemple une dépression, cette dépression étant utilisée comme énergie de commande. Ainsi, le coût de cette énergie est nul, ce qui avantage économiquement le dispositif de commande 10. Finalement, le dispositif de commande 10 de la présente invention est très simple, parfaitement étanche, performant, fiable et économique.

## Revendications

1. Vanne papillon (11) pourvue d'un dispositif de commande (10, 60), ladite vanne comportant un corps (12) traversé par un conduit (13) pour le passage d'un fluide ainsi qu'un papillon (14) disposé dans le conduit et monté pivotant autour d'un axe de rotation fixe (15) de sorte que le papillon (14) obture plus ou moins complètement le conduit (13) selon sa position angulaire, ledit dispositif de commande (10, 60) comportant une tige d'actionnement (23) couplée à un organe de commande agencé pour la déplacer de façon linéaire dans un orifice de guidage (24) ménagé dans une paroi latérale (17) du corps, cette tige d'actionnement (23) étant couplée audit papillon (14) de sorte que, quand la tige d'actionnement (23) est déplacée linéairement, elle entraîne en rotation le papillon (14) autour de son axe de rotation (15), caractérisée en ce que le papillon (14) comporte un alésage central traversant (26) pourvu d'un tronçon fileté (26') s'étendant sur une longueur supérieure au rayon dudit papillon, en ce que la tige d'actionnement (23) s'étend sur une longueur au moins égale au diamètre du papillon et comporte un tronçon fileté (27) en prise avec ledit tronçon fileté (26') du papillon, et en ce que ledit alésage (26) et ladite tige d'actionnement (23) sont coaxiaux à l'axe de rotation (15) du papillon.

2. Vanne papillon selon la revendication 1, caractérisée en ce que l'orifice de guidage (24) ménagé dans la paroi latérale (17) du corps présente une section carrée et en ce que la tige d'actionnement (23) comporte un tronçon de section carrée (25) en correspondance de sorte que cette tige d'actionnement (23) soit guidée en translation dans ledit orifice et bloquée en rotation par rapport audit corps (12).

3. Vanne papillon selon la revendication 1, caractérisée en ce que les filetages du tronçon fileté (26') de l'alésage central (26) et du tronçon extérieur (27) de la tige d'actionnement (23) comportent chacun plusieurs filets de vis identiques.

4. Vanne papillon selon la revendication 1, caractérisée en ce que le déplacement linéaire de la tige d'actionnement (23) est limité entre deux positions extrêmes, et en ce que la course de la tige d'actionnement (23) entre ces deux positions extrêmes correspond à une rotation de 90 degrés du papillon (14) respectivement entre une position fermée, dans laquelle il obture complètement le conduit (13), et une position ouverte, dans laquelle il ouvre au maximum le conduit (13).

5. Vanne papillon selon la revendication 1, dont le dispositif de commande (10) comporte un actionneur pneumatique pourvu d'une enceinte (37) dans laquelle est disposée une membrane étanche (33) mobile et liée rigidement à la tige d'actionnement (23), cette membrane (33) divisant hermétiquement l'enceinte (37) en deux chambres (38, 39) et étant agencée pour adopter une position à l'intérieur de l'enceinte (37) en fonction de la différence de pression entre les deux chambres (38, 39) afin de commander en déplacement linéaire ladite tige d'actionnement (23) du papillon (14), caractérisée en ce que le dispositif de commande (10) comporte un boîtier (18) fermé d'un côté par un fond (19) et ouvert de l'autre côté par une ouverture (20), en ce que ledit boîtier (18) est fixé au corps (12) de la vanne (11) avec l'ouverture (20) en correspondance de la paroi latérale (17) de sorte que le boîtier (18) définit avec cette paroi latérale (17) ladite enceinte (37) et en ce que le pourtour de la membrane étanche (33) est pris en sandwich entre la paroi latérale plane (17) du corps (12) et l'extrémité du boîtier (18) correspondant à l'ouverture (20).

6. Vanne papillon selon la revendication 5, caractérisée en ce que l'une des chambres (38) communique avec le conduit (13) par un passage (40) ménagé dans la paroi latérale (17) et est une chambre de référence, et en ce que l'autre chambre (39) communique avec une source de fluide de commande par un passage (41) ménagé dans le boîtier (18) et est une chambre de commande.

7. Vanne papillon selon la revendication 6, caractérisée en ce que le dispositif de commande (10) comporte un ressort de rappel (42) disposé dans l'une des deux chambres (38, 39), ce ressort de rappel (42) étant agencé pour solliciter axialement ladite tige d'actionnement (23).

8. Vanne papillon selon la revendication 1, dont le dispositif de commande (60) comporte un actionneur électrique pourvu d'au moins une bobine d'induction (63) montée autour d'une culasse fixe (64) agencée pour recevoir un noyau mobile (65) en translation, le noyau mobile (65) étant couplé à ladite tige d'actionnement (23), l'ensemble étant logé dans un boîtier (61), caractérisée en ce que ledit boîtier (61) est monté latéralement sur ledit corps (12) autour d'une partie saillante (62) dudit corps, cette partie saillante (62) comportant un logement (66) coaxial à l'axe de rotation (15) dudit papillon (14), en prolongement dudit orifice de guidage (24) et agencé pour guider linéairement ledit noyau mobile (65).

9. Vanne papillon selon la revendication 8, caractérisée en ce que le noyau mobile (65) et la tige d'actionnement (23) sont formés d'une seule pièce.

10. Vanne papillon selon la revendication 8, caractérisée en ce que le dispositif de commande (60) comporte un ressort de rappel (67) disposé entre ledit noyau mobile (65) et le fond dudit logement (66).

11. Vanne papillon selon l'une quelconque des revendications précédentes, caractérisée en ce que le dispositif de commande (10, 60) comporte un organe de mesure (50) du déplacement linéaire de ladite tige d'actionnement (23).

12. Vanne papillon selon la revendication 11, caractérisée en ce que ledit organe de mesure (50) est monté dans ledit corps (12) à l'opposé dudit dispositif de commande (10, 60) et est couplé à l'extrémité libre de ladite tige d'actionnement (23).

13. Vanne papillon selon la revendication 11, caractérisée en ce que ledit organe de mesure (50) comporte un potentiomètre linéaire (51) agencé pour délivrer un signal proportionnel au déplacement linéaire de ladite tige d'actionnement (23).
